# EUROPEAN PATENT SPECIFICATION

(11) **EP 2 863 039 B1**
(45) Date of publication and mention of the grant of the patent: **21.06.2017**
(21) Application number: 14188928.7
(22) Date of filing: 15.10.2014
(51) Int. Cl.: F02K 1/72, F02K 1/82

(54) **Inverted track beam attachment flange**
Invertierter Befestigungsflansch eines Trägers mit Führungsschiene
Bride de fixation de poutre de piste inversée

(30) Priority: 21.10.2013 US 201314059253
(43) Date of publication of application: 22.04.2015
(73) Proprietor: Rohr, Inc., Chula Vista, CA 91910-2098 (US)
(72) Inventor: Aten, Michael, San Diego, CA California 92129 (US)
(74) Representative: Leckey, David Herbert

(56) References cited:
- US-A- 5 083 426
- US-A1- 2012 097 761
- US-A1- 2012 168 248

## Description

### FIELD

The present disclosure relates to an aircraft nacelle, and more particularly, to acoustic properties, sound waves and air flow associated with aircraft nacelle structures.

### Background

Typical aircraft turbofan jet engines include a fan that draws and directs a flow of air into a nacelle and, subsequently, into and around an engine core. The nacelle surrounds the engine core and helps promote the flow of air into the fan and turbine engine that drives the fan. Bypass flow is air that is directed around the engine core. In modem turbofan engines, the bypass flow typically provides the majority of thrust for an aircraft. The bypass flow also can be used to help slow a landed aircraft. Thrust reversers mounted in the nacelle structure selectively reverse the direction of the bypass flow to generate reverse thrust. During normal engine operation, the bypass flow may or may not be mixed with the turbine engine core exhaust before exiting the engine assembly. Typical engines of jet aircraft generally produce high levels of audible noise during normal operation. As such, reducing noise in particular locations may be desirable.

A nacelle structure with the features of the preamble to claim 1 is disclosed in US 2012/0097761.

### SUMMARY

The present invention provides a nacelle structure in accordance with claim 1.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A depicts a typical propulsion system;
FIG. 1B depicts a portion of a thrust reverser with the translating sleeve removed to illustrate a fluid flow path and the IFS;
FIG. 2 depicts a noise suppression structure in accordance with various embodiments;
FIG. 3 depicts a track beam assembly in accordance with the current state of the art; and
FIG. 4 depicts an inverted track beam assembly in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not of limitation. The scope of the invention is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

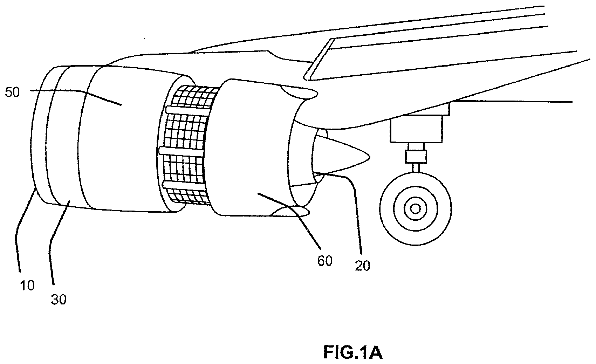

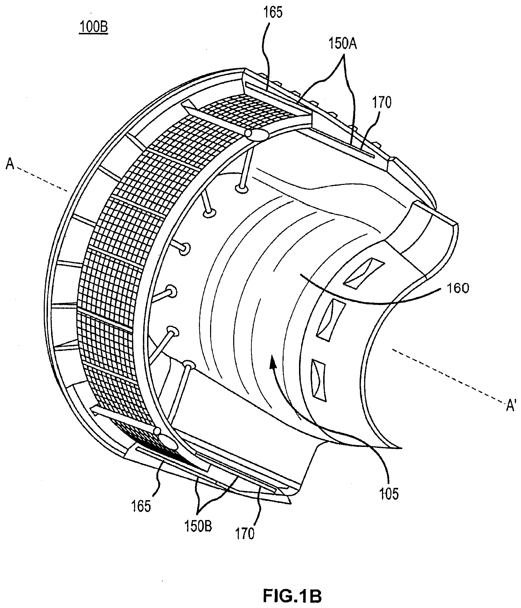

As described above, and with reference to FIG. 1, a typical propulsion system of an aircraft may comprise an engine and a nacelle 50 having an inlet 10, fan cowl 30, thrust reversing system (or simply a thrust reverser 60) and exhaust 20. The thrust reverser 60 may comprise a cascade array, a translating sleeve, and one or more blocker doors. The cascade array may comprise a plurality of vanes that redirect airflow during certain operations (e.g., landing) to generate reverse thrust. The translating sleeve comprises a structure situated, in a stowed configuration, concentrically about the cascade array. The blocker doors are coupled (e.g., by way of one or more hinges) to the translating sleeve.

With reference to FIG. 1B, a portion of a conventional thrust reversing assembly is depicted. The thrust reversing assembly may comprise an IFS 105. The IFS 105 may comprise a substantially annular structure having a radially inner surface and a radially outer surface. The radially outer surface of the IFS 105 may be aerodynamically shaped and may define a radially inner surface of a bypass duct 160 through which bypass air may flow. The thrust reversing assembly may comprise an upper track beam 150A ("hinge beam") and a lower track beam 150B. Traditionally, both of the upper track beam and the lower track beam comprise two parallel tracks, as upper track 165 and lower track 170. Upper track 165 and lower track 170 may be configured to mate with and couple to a portion of the translating sleeve. These tracks 165, 170 may include one or more tracks or grooves, and the translating sleeve may be coupled (e.g., as through a tongue-in-groove track structure) to each of the tracks 165, 170. The translating sleeve may thus translate aft (deploy) and forward (stow) relative to the track 165, 170 along these grooves and/or tracks.

Conventional systems may employ a plurality of drag links, each coupled, at a first end, to a plurality of blocker doors and, at a second end, to an inner fixed structure 105 ("IFS"). The IFS 105 defines the interior aerodynamic surface of the annular bypass air duct, and surrounds the engine core forming a substantially annular enclosed space between it and the engine core. The IFS 105 is situated about an engine core inboard of the translating sleeve. Thus, the space between the IFS 105 and the translating sleeve defines an air duct through which bypass air flows to generate thrust.

During a thrust reversing operation, the translating sleeve may be urged aft by a series of translating sleeve actuators ("TRAs"). As the translating sleeve translates aft, the cascade array may be exposed. Likewise, as the translating sleeve is translated aft, the first end of each drag link (coupled to the translating sleeve) may translate aft. As this occurs, the drag links employed by conventional systems may drag or pull each blocker door radially inward to block airflow. Airflow reflects from each blocker door through the cascade array, generating reverse thrust.

The translating sleeve may be made in two units, each of generally C-shape in front (and rear) elevation, which are supported for sliding on upper and lower track beams 165, 170 that extend rearwardly from the bulkhead. Upon command, generally initiated by the pilot, the actuators drive the translating sleeve rearwardly. The inner wall member of the translating sleeve moves to a location that places its inner, forward edge close to the cowl of the gas turbine, a position in which bypass airflow to the rear of the air duct is blocked. The outer wall member moves with the inner wall member away from the fan case cowling, thus forming an opening rearwardly of the bulkhead between the bypass air duct and the exterior of the engine. The bypass airflow flows out through the opening. A cascade array, which is composed of several sections having frames that support curved vanes, turns the air flow so that it flows outwardly and forwardly.

As described above, jet engine nacelles typically include thrust reversing structures, or simply thrust reversers 60. Thrust reversers 60 often include a structure known as a cascade as well as a structure known as a translating sleeve. The cascade comprises a plurality of vents that redirect airflow during certain operations (e.g., landing) to generate reverse thrust. The translating sleeve comprises a tapering generally cylindrical structure. The translating sleeve may be disposed about the cascade in a stowed position. The translating sleeve may translate from a forward position to a more aft position during deployment (i.e., engagement of the thrust reverser) to expose the cascade. Thus, during flight, a cascade may be stowed or enclosed within a translating sleeve to prevent reverse thrust. During landing, however, the translating sleeve may translate aft to expose the cascade. Translating sleeve may move along tracks 165, 170.

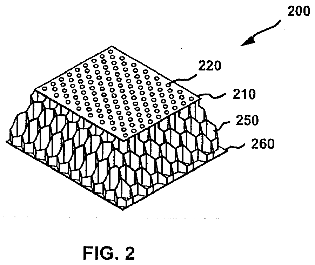

According to various embodiments and with reference to FIG. 2, aircraft nacelle and their associated structures may comprise noise suppressing structures 200. The noise suppressing structure 200 may comprise, in various embodiments, any suitable structure for the suppression of noise. For example, the noise suppressing structure 200 may comprise a latticework of hexagonal cells 250. Each cell 250 of the latticework may comprise a perforated front face 210 and a (non-perforated) back face 260. A noise suppressing structure 200 may comprise a cavity formed in a core 250 of a composite material used to form structures of the nacelle 50.

Cells 250 may be configured to cancel and/or suppress sound waves of various wavelengths. The length of a cell 250 may extend along the y axis. The length of each cell 250 may be configured in accordance with the sound wave 225 length that is desired to be canceled and/or suppressed. Stated another way, the dimensions of each noise suppressing structures 200, such as cell 250 may be dependent on the noise frequencies and attenuation desired. The amount of acoustic treatment in the fan duct is increased which may provide more noise attenuation and reduced "neighborhood noise."

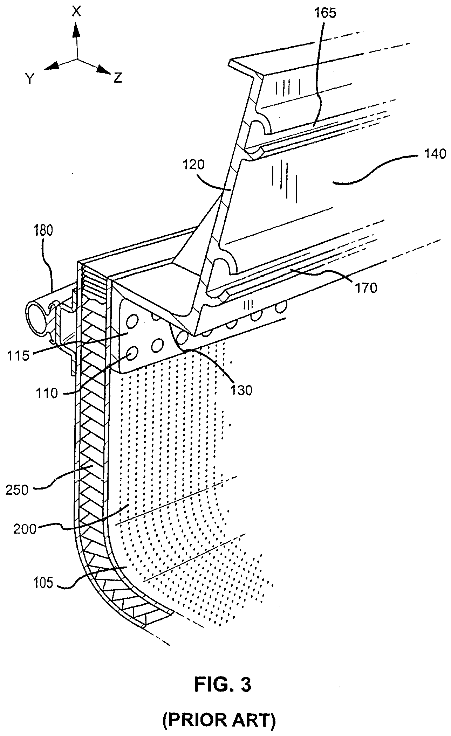

With reference to FIG 3, tracks 165, 170 may comprise one or more channels or grooves. As described above, a translating sleeve may be coupled to the tracks 165, 170, and the sleeve may translate in forward and aft directions along grooves. In particular, the sleeve may translate aft to expose a cascade. In addition, the sleeve may translate forward to cover or enclose a cascade.

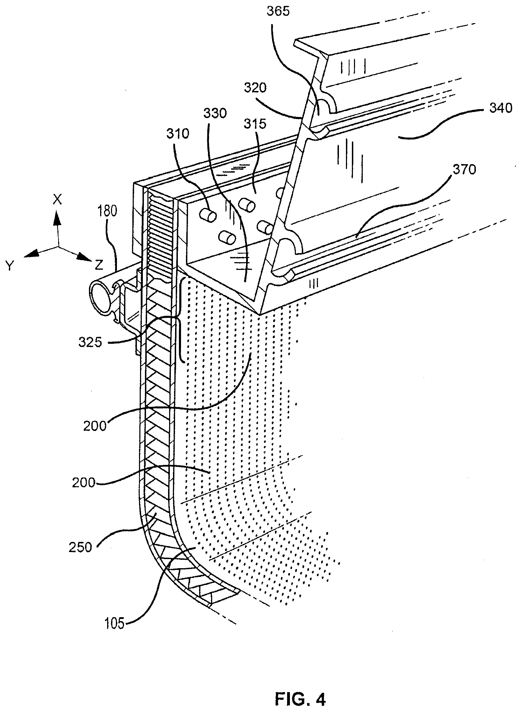

Referring again to FIG. 3 a perspective view of the upper track beam 120 is shown. Track beam 120 may comprise a face 140. Upper track 165 and lower track 170 may be located along face 140. Tracks 165, 170 may be flush with face 140. Tracks 165, 170 may extend from the surface of face 140 (as shown in FIG. 3 and 4). As shown, the noise suppressing panel 200 may be integral to the IFS 105 surfaces. Stated another way, the composite materials integral to IFS 105 may comprise core 250. Track beam 120 may be coupled, such as through fasteners (e.g. rivets 110) to IFS 105. For example, an "L" shaped attachment flange 115 may extend along a surface of IFS 105 for attaching track beam 120 to IFS 105. Side wall 130 may be substantially perpendicular to attachment flange 115. A "Z" shape may be formed from the interface of attachment flange 115, side wall 130, and face 140. IFS 105 may comprise a fire seal 180 coupled to a surface, such as a non-airflow surface. Fasteners 110 may be inserted in and/or coupled to IFS 105 according to high/exacting tolerances, such as requiring a substantially flush mount to the IFS 105 to better provide for smoother air flow. Note, in the system of FIG 3, noise cancellation structures, e.g. noise suppressing system 200, formed in the IFS 105 are not directly adjacent to a side wall 130 of the track beam 120, instead, attachment flange 115 is between noise suppressing systems 200 and side wall 130.

According to the invention and with reference to FIG. 4, an inverted track beam attachment flange 315 is depicted as part of track beam 320. Track beam attachment flange 315 comprises an inverted coupling. Track beam 320 comprises a side wall 330. Track beam 320 comprises a face 340. Upper track 365 and lower track 370 may be located along face 340. Tracks 365, 370 may be flush with face 340. Tracks 365, 370 may extend from the surface of face 340 (as shown in FIG. 4). Track beam 320 is coupled through fasteners (310) to IFS 105. Side wall 330 may be substantially perpendicular to attachment flange 315. Fastener locations 310 are accessible by accessing the interior of the formed "U" shape of attachment flange 315 and track beam walls 330 and 320. According to various embodiments, the entire span of the attachment flange 315 and track beam walls 330 and 320 may form a "U" shape or a portion of the axial length of attachment flange 315 and/or track beam walls 330 and 320 may form a "U" shape. Stated another way, the "U" shaped attachment flange 315 and track beam walls 330 and 320 may run the length of the track beam or a portion of the entire length of the track beam.

Relocating attachment flange 315 to an inverted position may expand noise suppressing systems 200 surface area on/in IFS 105. For instance, location 325 which was previously occupied by attachment flange 115 on prior art (as shown in FIG. 3) may be devoted to and/or include noise suppressing systems 200. In fact, the geometry of the inverted track beam attachment flange 315 increases the total noise cancellation capabilities of the nacelle structure having the inverted track beam flange 315. Location 325 may run along the entire length of track beam 340, and/or a portion of it. Moreover, fasteners 310 may be inserted in and/or coupled to IFS 105 with exposed head fasteners for improved structural capability.

Attachment flange 315 is hidden behind side wall 330 as viewed from the perspective of bypass airflow. In this way, the airflow of the system may be increased as compare with the system of FIG. 3. For instance, the surface height of attachment flange 315 does not impact bypass airflow as it may have in traditional embodiments, (see FIG. 3), for improved aerodynamic performance.

According to various embodiments, there is no gap between a surface of IFS 105 and side wall 330. Stated another way, side wall 330 and IFS 105 surface are adjacent. With brief reference to FIG. 4 attachment flange 115 lies between surface of IFS 105 and side wall 330. Though side wall 330 is depicted as an approximately 90 angle from the surface of IFS 105, other angles and shapes of relief are contemplated herein.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

## Claims

1. A nacelle structure for an aircraft engine comprising;
an inner fixed structure (105) coupled to an inverted track beam flange (320),
wherein the inner fixed structure (105) is coupled to the inverted track beam flange (320) along an attachment flange (315) via fasteners (310), and
wherein the inverted track beam flange (320) forms a "U" shape, the "U" shape being formed by the attachment flange (315), a side wall (330) and a track beam flange face (340), and the attachment flange (315) is coupled to the IFS (105) along a non-bypass airflow surface; **characterised in that**
the "U" shape is open, such that fasteners (310) are accessible by accessing the interior of the "U" shape.

2. The nacelle structure of claim 1, further comprising noise cancellation structures (200) formed in the IFS (105) that are directly adjacent to a side wall (330) of the inverted track beam flange (320).

3. The nacelle structure of claim 1 or 2, wherein a geometry of the thrust reverser structure increases the surface area of noise cancellation structures (200) of the inner fixed structure (105).

4. The nacelle structure of claim 3, wherein the geometry of the thrust reverser structure increases the total noise cancellation capabilities of the nacelle structure.

5. The nacelle structure of any preceding claim, wherein inverted track beam flange (320) comprises the track beam face (340) having an upper track beam groove (365) and a lower track beam groove (370).

6. The nacelle structure of any preceding claim, wherein the face of the fasteners (310) are not flush with the surface of the attachment flange (315).

## Patentansprüche

1. Gondelstruktur für ein Flugzeugtriebwerk, umfassend:
eine innere fixierte Struktur (105), die an einen umgekehrten Fahrbalkenflansch (320) gekoppelt ist,
wobei die innere fixierte Struktur (105) über Befestigungsmittel (310) entlang eines Befestigungsflanschs (315) an einen umgekehrten Fahrbalkenflansch (320) gekoppelt ist und
wobei der umgekehrte Fahrbalkenflansch (320) eine "U"-Form bildet, wobei die "U"-Form durch den Befestigungsflansch (315), eine Seitenwand (330) und eine Fahrbalkenflanschfläche (340) gebildet ist und der Befestigungsflansch (315) entlang einer Nicht-Bypass-Luftströmungsfläche an die IFS (105) gekoppelt ist; **dadurch gekennzeichnet, dass**
die "U"-Form offen ist, derart, dass Befestigungsmittel (310) durch Zugriff auf das Innere der "U"-Form zugänglich sind.

2. Gondelstruktur nach Anspruch 1, ferner umfassend Geräuschdämpfungsstrukturen (200), die in der IFS (105) gebildet sind und unmittelbar zu einer Seitenwand (330) des umgekehrten Fahrbalkenflansches (320) benachbart sind.

3. Gondelstruktur nach Anspruch 1 oder 2, wobei eine Geometrie der Schubumkehrstruktur die Oberfläche von Geräuschdämpfungsstrukturen (200) der inneren fixierten Struktur (105) vergrößert.

4. Gondelstruktur nach Anspruch 3, wobei die Geometrie der Schubumkehrstruktur die Geräuschdämpfungsgesamtkapazität der Gondelstruktur erhöht.

5. Gondelstruktur nach einem der vorangehenden Ansprüche, wobei der umgekehrte Fahrbalkenflansch (320) die Fahrbalkenfläche (340) mit einer oberen Fahrbalkennut (365) und einer unteren Fahrbalkennut (370) umfasst.

6. Gondelstruktur nach einem der vorangehenden Ansprüche, wobei die Fläche der Befestigungsmittel (310) nicht mit der Fläche des Befestigungsflansches (315) bündig ist.

## Revendications

1. Structure de nacelle pour un moteur d'aéronef comprenant ;
une structure fixe interne (105) couplée à une bride de poutre inversée (320),
dans laquelle la structure fixe interne (105) est couplée à la bride de poutre inversée (320) le long d'une bride de fixation (315) via des attaches (310), et
dans laquelle la bride de poutre inversée (320) forme une forme en "U", la forme en "U" étant formée par la bride de fixation (315), une paroi latérale (330) et une face de bride de poutre (340), et la bride de fixation (315) est couplée au système d'instruments de vol intégrés (105) le long d'une surface d'écoulement d'air non dérivé ; **caractérisée en ce que**
la forme en "U" est ouverte, de sorte que les attaches (310) sont accessibles en accédant à l'intérieur de la forme en "U".

2. Structure de nacelle selon la revendication 1, comprenant en outre des structures d'annulation de bruit (200) formées dans le système d'instruments de vol intégrés (105) qui sont directement adjacentes à une paroi latérale (330) de la bride de poutre inversée (320).

3. Structure de nacelle selon la revendication 1 ou 2, dans laquelle une géométrie de la structure d'inverseur de poussée augmente la superficie des structures d'annulation de bruit (200) de la structure fixe interne (105).

4. Structure de nacelle selon la revendication 3, dans laquelle la géométrie de structure d'inverseur de poussée augmente les capacités d'annulation totale de bruit de la structure de nacelle.

5. Structure de nacelle selon une quelconque revendication précédente, dans laquelle la bride de poutre inversée (320) comprend la face de poutre (340) ayant une rainure de poutre supérieure (365) et une rainure de poutre inférieure (370).

6. Structure de nacelle selon une quelconque revendication précédente, dans laquelle la face des attaches (310) n'est pas alignée avec la surface de la bride de fixation (315).
